# EUROPÄISCHE PATENTSCHRIFT

(11) **EP 2 477 740 B1**
(45) Veröffentlichungstag und Bekanntmachung des Hinweises auf die Patenterteilung: **21.01.2015**
(21) Anmeldenummer: 10760913.3
(22) Anmeldetag: 10.09.2010
(51) Int. Cl.: B01J 31/18, C07F 13/00, B01J 31/22

(54) **Verfahren zur Herstellung von verbrückten Mangan-Komplexen des Triazacyclononans**
Method of preparing bridged manganese complexes of triazacyclononane
Méthode de préparer les complexes traversiers de manganèse du triazacyclononane

(30) Priorität: 18.09.2009 EP 09290713
(43) Veröffentlichungstag der Anmeldung: 25.07.2012
(73) Patentinhaber: Clariant Finance (BVI) Limited, Road Town, Tortola (VG); WeylChem Lamotte, 60350 Trosly Breuil (FR)
(72) Erfinder: REINHARDT, Gerd, 65779 Kelkheim (DE); BEST, Michael, 65812 Bad Soden (DE); SIDOT, Christian, F-60200 Compiègne (FR)
(74) Vertreter: Ackermann, Joachim
(86) Internationale Anmeldenummer: PCT/EP2010/005569
(87) Internationale Veröffentlichungsnummer: WO 2011/032666

(56) Entgegenhaltungen:
- WO-A1-93/25562

## Beschreibung

Die Erfindung betrifft ein Verfahren zur Herstellung von schwerlöslichen, kristallinen Metallkomplex-Verbindungen, die als Bleichkatalysatoren in Wasch- und Reinigungsmitteln Verwendung finden.

In europäischen Pulverwaschmitteln basiert die Bleichkomponente seit langem auf Bleichmitteln, die während der Wäsche Peroxidverbindungen freisetzen. Diese stark oxidierend wirkenden Verbindungen entfernen sehr effektiv die verschiedensten Fleckenarten, wie beispielsweise von Tee, Wein und Früchten, ohne die Umwelt zu belasten, wie es mit der in anderen Ländern verbreiteten Chlorbleiche der Fall ist. Je nach verwendeter Peroxidverbindung, meist Perborate oder Percarbonate, betragen die zur effektiven Bleiche notwendigen Waschtemperaturen zwischen 60 und 95 °C. Bei Temperaturen unter 60 °C fällt die Wirksamkeit der Sauerstoffbleiche hingegen stark ab. Aus ökonomischen und ökologischen Gründen ist man deshalb bemüht, Verbindungen zu finden, die eine Sauerstoffbleiche auch bei niederen Temperaturen ermöglichen. Während sich zur Verbesserung der Bleichleistung von Waschmitteln an textilen Geweben bei niederen Temperaturen meist Bleichaktivatoren wie Tetraacetylethylendiamin (TAED), Nonanoyloxybenzolsulfonat-Natrium (NOBS) oder Decanoyloxybenzoesäure (DOBA) durchgesetzt haben, finden zum Reinigen harter Oberflächen, z. B. in Geschirrspülmitteln neben Bleichaktivatoren verstärkt Bleichkatalysatoren Verwendung. Hierbei wird insbesondere eine gute Reinigungsleistung an hartnäckigen Teeanschmutzungen erwartet. In neuerer Zeit finden Bleichkatalysatoren auch in stärkerem Maße Verwendung in der Textil- und Papierbleiche sowie in der chemischen Synthese (Oxidationsreaktionen).

Bei diesen Bleichkatalysatoren handelt es sich meist um metall-haltige Verbindungen des Eisens, Cobalts oder Mangans. Einerseit sind relativ einfache Verbindungen wie Metallsalze (z. B. Manganacetate) oder Koordinationsverbindungen wie Cobalt-pentaminacetate im Einsatz, andererseits sind Übergangsmetallkomplexe mit offenkettigen oder cyclischen Liganden von besonderem Interesse, da sie die Bleichleistung der einfachen Systeme um ein Vielfaches übertreffen. Aus der Reihe der letztgenannten Katalysatoren weisen insbesondere Mangan- oder Eisenkomplexe enthaltend Liganden auf Basis von Triazacyclononan und dessen Derivaten besondere bleichaktive Wirksamkeit oder hohe Oxidationskraft auf.

Beispiele für Herstellung und Anwendung solcher Metallkomplexe sind u. a. in US 2009/0126121, WO 2008/086937, US 2002/0066542, US 2001/0044402, US 2001/0025695, US 5,516,738, WO 2000/088063 und EP 0 530 870 beschrieben. Für ihre einfache Handhabung während Herstellung, Verarbeitung und Anwendung ist es in vielen Fällen erforderlich, feste, wenig hygroskopische Verbindungen einzusetzen. Hier haben sich insbesondere Bleich- und Oxidationskatalysatoren bewährt, die großvolumige Gegenionen wie Hexafluorophosphat, Perchlorat oder Tetraphenylborat enthalten. Solche Komplexe werden z. B. in EP 0 458 397, EP 0 458 398 und WO 96/06154 beschrieben.

Zur Synthese solcher Übergangsmetallkomplexe des Triazacyclonans und dessen Derivaten sind eine Reihe von Herstellmethoden bekannt. So wird z. B. in WO-A-93/25562 ein Verfahren zur Herstellung von wirksamen Mangankomplex-Katalysatoren beschrieben, das die folgenden Schritte umfasst:
i) Umsetzung von einem Mangan(II)-Salz mit einem Triazacyclononanderivat wie 1,4,7-Trimethyl-1,4,7-triazacyclononan in Gegenwart eines Gegenionsalzes wie KPF₆ in einem wässrig-alkoholischen Medium zur Bildung einer Mangan-Koordinationsverbindung,
ii) und anschließende Oxidation der Mangan-Koordinationsverbindung mit einem Oxidationsmittel, wobei gleichzeitig ein pH-Wert von mindestens 12 aufrechterhalten wird, zur Bildung des gewünschten Mangankomplexes, wobei das Mangan bevorzugt in der Oxidationsstufe +3 und/oder +4 vorliegt,
iii) das im Schritt ii) erhaltene Reaktionsgemisch wird auf einen pH-Wert von 7 bis 9 eingestellt, anschließend werden die gebildeten Manganoxide abfiltriert und der Mangankomplex durch Verdampfung des Lösungsmittelgemisches isoliert. Die erzielten Ausbeuten liegen bei 59 bis 73%.

In ähnlicher Weise wird in WO 96/06145 ein ethylverbrückter Triazacyclononanligand mit Mangan(II)acetat in Gegenwart von KPF₆ komplexiert und anschließend durch Oxidation mit Wasserstoffperoxid in den gewünschten Mangan(III/IV)komplex überführt.

In EP 0 522 817 wird in einem nichtwässrigen Lösemittel (Acetonitril) gearbeitet, wobei ein Mangan(III)salz wiederum in Gegenwart des Liganden und des Gegenions in den Mangan(III)komplex überführt wird, der anschließend zum Mangan(IV)komplex aufoxidiert wird.

Die beschrieben Verfahren werfen neben teilweise niedrigen Ausbeuten auch Probleme hinsichtlich Durchführung im technischen Maßstab auf:
- Das Lösungsmittelgemisch Wasser/Alkohol (Ethanol) wird in großen Mengen eingesetzt, um Löslichkeit des Mangankomplexes zu erreichen. Dies hat kleine Raum-Zeit-Ausbeuten zur Folge (0,05 kg/l), des Weiteren müssen zur Isolierung des Komplexes große Lösemittelmengen verdampft werden.
- Bei der thermischen Abtrennung der großen Lösemittelmengen zur Isolierung des pulverförmigen Mangankomplexes zersetzt sich im technischen Maßstab das Zielprodukt teilweise unter Bildung von Manganoxid, das abetrennt werden muss. Eine Umkristallisation stellt jedoch einen zusätzlichen Reaktionsschritt dar.
- Der Mangankomplex ist häufig mit einem unerwünschten Nebenprodukt verunreinigt. Hierbei handelt es sich um das Salz, gebildet aus dem Liganden (Triazacyclononan/-derivat) und dem Gegenion (z. B. PF₆⁻). Dessen Entfernung erfordert einen weitereren Reinigungsschritt.

Es bestand daher Bedarf an einem neuen, großtechnisch durchführbaren Verfahren zur Herstellung schwerlöslicher, kristalliner Metallkomplexe, vorzugsweise von Mangankomplexen, die gegebenenfalls als weiteres Metall Eisen enthalten können, das zu einer verbesserten Raum-Zeitausbeute führt und mit wenigen Reinigungsschritten auskommt.

Es wurde nun überraschenderweise gefunden, dass diese Aufgabe gelöst wird und die Herstellung der genannten Metallkomplexe auch dann möglich ist, wenn von relativ konzentrierten Startlösungen ausgegangen wird und diese Konzentration an Feststoff im Wesentlichen bis zum Ende der Umsetzungen beibehalten wird. Bei diesem Verfahren wird mit Wasser als alleinigem Lösungsmittel gearbeitet.

In einem ersten Reaktionsschritt wird zunächst ein organischer Ligand wie beispielsweise der Tricyclononan-Ligand mit einem Metallsalz wie z. B. Mangansalz umgesetzt, wobei das später erforderliche Gegenion nicht zugegen ist. Das Metallion des gebildeten Komplexes wird bei erhöhtem pH zur gewünschten Oxidationsstufe aufoxidiert, anschließend die als Nebenprodukt gebildeten Metall- wie z. B. Manganoxide abfiltriert und dann erst durch Zugabe des Gegenions der schwerlösliche Komplex ausgefällt und isoliert.

Mit der vorliegenden Erfindung wird ein schonendes Verfahren zur Herstellung von Metallkomplexen zur Verfügung gestellt, das ohne organisches Lösungsmittel auskommt, in den technischen Maßstab überführbar ist und hochreine Produkte in hoher Raum-Zeit-Ausbeute und Reinheit liefert. Insbesondere ist das Produkt frei von Nebenprodukten wie Manganoxiden und Ligandsalzen, so dass auf einen weiteren Reinigungsschritt nach der Synthese verzichtet werden kann.

Gegenstand der vorliegenden Erfindung ist ein Verfahren zur Herstellung von Mangankomplex-Verbindungen der allgemeinen Formel (1) 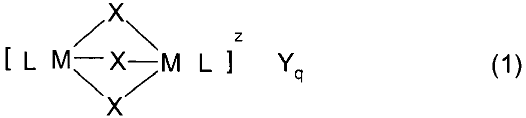 worin
- M: ausgewählt ist aus Mangan und Eisen in der III- oder IV-Oxidationsstufe, wobei aber mindestens ein M ein Mangan in der III- oder IV-Oxidationsstufe ist,
- X: unabhängig voneinander eine koordinierende oder verbrückende Spezies ist, ausgewählt aus H₂O, O₂²⁻, O₂⁻, O²⁻, OH⁻, HO₂⁻, SH⁻, S²⁻, SO, Cl⁻, N³⁻, SCN⁻, N₃⁻, RCOO⁻, NH₂⁻ und NR₃, wobei R ein Radikal ausgewählt aus H, Alkyl und Aryl ist,
- L: 1,4,7-Trimethyl-1,4,7-triazacyclononan ist,
- z: eine ganze Zahl von -4 bis +4 ist,
- Y: ein mono- oder multivalentes Gegenion aus der Gruppe Hexafluorophosphat, Perchlorat oder Tetraphenylborat ist, das zur Ladungsneutralität des Komplexes führt, und
- q: eine ganze Zahl von 1 bis 4 ist,
gekennzeichnet durch die folgenden Verfahrensschritte:
a) Umsetzung von einem oder mehreren zweiwertigen Metallsalzen, wobei das eine oder die mehreren zweiwertigen Metallsalze ausgewählt sind aus zweiwertigen Mangan- und Eisensalzen und mindestens ein zweiwertiges Metallsalz ein zweiwertiges Mangansalz ist, mit dem Ligand L in Wasser als Lösungsmittel zur Bildung einer Koordinationsverbindung aus dem einen oder den mehreren zweiwertigen Metallsalzen und dem Ligand L,
b) Oxidation der Koordinationsverbindung aus Schritt a) mit einem Oxidationsmittel, wobei gleichzeitig ein pH-Wert von 11 bis 14 und vorzugsweise 12 bis 14 eingehalten wird, zur Überführung des Metalls M von der zweiwertigen in die drei- und/oder vierwertige Stufe,
c) Absenkung des pH-Wertes des Reaktionsgemisches auf einen pH-Wert von 4 bis 9, vorzugsweise von 5 bis 8, und Abtrennung etwaig gebildeter Metalloxide oder -hydroxide des Metalls M und
d) Zugabe eines Salzes der Formel Me_{z}Y_{q}, worin Me für ein Alkalimetallion, ein Ammoniumion oder ein Alkanolammoniumion steht und Y, z und q die angegebenen Bedeutungen haben, bei einem pH-Wert von 4 bis 9 und vorzugsweise von 5 bis 8, und wobei das Gegenionensalz Me_{z}Y_{q} erst nach dem Oxidationsschritt und der Abtrennung der gebildeten Metalloxide und -hydroxide in die Reaktionsmischung eingebracht und umgesetzt wird.

Die als Radikal R genannte Alkylgruppe ist vorzugsweise C₁ bis C₄-Alkyl und die als Radikal R genannte Arylgruppe ist vorzugsweise C₆H₅ (Phenyl).

In einer bevorzugten Ausführungsform des erfindungsgemäßen Verfahrens wird die kristallin ausgefallene Mangankomplex-Verbindung der allgemeinen Formel (1) in einem Schritt e) isoliert, vorzugsweise durch Filtration oder Zentrifugieren.

Das erfindungsgemäße Verfahren unterscheidet sich vom Stand der Technik dadurch, dass die Umsetzungen in konzentrierten wässrigen Reaktionsmischungen durchgeführt werden können und insbesondere dadurch, dass das Gegenionsalz Me_{z}Y_{q} erst nach dem Oxidationsschritt und der Abtrennung der gebildeten Metalloxide und -hydroxide in die Reaktionsmischung eingebracht und umgesetzt wird.

Im Schritt a) des erfindungsgemäßen Verfahrens wird ein wasserlösliches Mangan(II)-Salz und gegebenenfalls zusätzlich ein wasserlösliches Eisen(II)-Salz, vorzugsweise aus der Gruppe der Acetate, Carbonate, Halogenide, Nitrate und Sulfate, zum Beispiel Mangandiacetat, Mangandichlorid, Mangandibromid, Mangansulfat, Mangandinitrat, Eisenchlorid, Eisensulfat oder Eisennitrat mit einer Ligand-Verbindung L umgesetzt, vorzugsweise im Molverhältnis von 4 : 1 bis 1 : 2, besonders bevorzugt im Molverhältnis von 2 : 1 bis 1 : 1 und insbesondere bevorzugt im Molverhältnis von 1,5 : 1 bis 1 : 1. Hierbei wird das Metall(II)-Salz und die Ligandverbindung in einer Gesamtmenge von mindestens 15 Gew.-Teilen pro 100 Gew.-Teile Wasser eingesetzt.

Besonders bevorzugt sind sämtliche M in der allgemeinen Formel (1) Mangan in der III- oder IV-Oxidationsstufe und sämtliche zweiwertigen Metallsalze aus Schritt a) zweiwertige Mangansalze. Insbesondere bevorzugt handelt es sich bei dem zweiwertigen Metallsalz aus Schritt a) um Mangandichlorid-4-hydrat.

Der organische Ligand L ist 1,4,7-Trimethyl-1,4,7-triazacyclononan (1,4,7-Me₃-TACN).

Die Umsetzung des Mangan(II)-Salzes und gegebenenfalls zusätzlich des Eisen(II)-Salzes mit dem Ligand L in Schritt a) wird erfindungsgemäß in Wasser als alleinigem Lösungsmittel durchgeführt. Es wird vorzugsweise nur soviel Wasser eingesetzt, dass das zweiwertige Metallsalz bzw. das Metall(II)-Salz (d. h. die Summe aus Mangan(II)-Salz und gegebenenfalls zusätzlich Eisen(II)-Salz) und die Ligandverbindung zusammen in einer Menge von mindestes 15 Gew.-Teilen, pro 100 Gew.-Teile Wasser, vorliegen. Die obere Grenze der Konzentration an Metall(II)-Salz und Ligandverbindung kann sehr hoch liegen, weil diese und die weiteren Umsetzungen sowohl in Lösung als auch in Suspension (Dispersion) durchgeführt werden können. Die obere Konzentrationsgrenze ist also im Wesentlichen durch die Rührbarkeit der Reaktionsmischungen gegeben, die Rührbarkeit ist auch der begrenzende Faktor für die Raum-Zeit-Ausbeute. Das Metall(II)-Salz und der Ligand werden demnach zusammen in einer Menge von vorzugsweise 15 bis 55 Gew.-Teilen und besonders bevorzugt von 20 bis 50 Gew.-Teilen, pro 100 Gew.-Teile Wasser eingesetzt. Die Umsetzung des Metall(II)-Salzes mit dem Ligand L in Wasser wird bei einer Temperatur von 10 bis 30 °C, vorzugsweise 15 bis 25 °C (Raumtemperatur), und Atmosphärendruck durchgeführt. Der Schritt a) des erfindungsgemäßen Verfahrens führt zur Bildung einer im Lösungsmittelgemisch gelösten Koordinationsverbindung aus dem Metall(II)-Salz und der Ligandverbindung. Bei der Berechnung der Menge an Metall(II)-Salz und Ligand in Wasser wird das gegebenenfalls im Metall(II)-Salz enthaltene Kristallwasser dem Lösungsmittel Wasser zugerechnet.

Im Schritt b) des erfindungsgemäßen Verfahrens wird die Metall(II)-Koordinationsverbindung bei einem pH-Wert von 11 bis 14, vorzugsweise von 12 bis 13, in der im Schritt a) erhaltenen Lösung oxidiert, wobei das Oxidationsmittel und die Base zur Einstellung des angegebenen pH-Wertes vorzugsweise gleichzeitig eingebracht werden. Die Oxidation wird vorzugsweise durch gleichzeitiges Einmischen eines Oxidationsmittels aus der Gruppe Luft, reiner Sauerstoff, Wasserstoffperoxid, Alkalimetallperoxid und Alkalimetallpermanganat und eines Alkalimetallhydroxids in die im Schritt a) erhaltene Lösung unter Aufrechterhaltung des angegebenen pH-Wertes durchgeführt. Bevorzugt wird die Oxidation durch Einmischen einer (vorbereiteten) Mischung bestehend aus einer 0,5 bis 35 Gew.-%igen, vorzugsweise 3 bis 20 Gew.-%igen, wässrigen Wasserstoffperoxid-Lösung und einer 5 bis 40 Gew.-%igen, vorzugsweise 10 bis 30 Gew.-%igen, wässrigen Alkalimetall-(Natrium oder Kalium)-Hydroxidlösung durchgeführt. Was die Temperatur und den Druck betrifft, wird die Oxidation im allgemeinen bei 3 bis 20 °C, vorzugsweise 5 bis 15 °C, und Atmosphärendruck durchgeführt. Hierbei wird das eingesetzte zweiwertige Metall auf die dreiwertige oder auf die bevorzugte drei- und/oder vierwertige Stufe aufoxidiert.

Im Schritt c) des erfindungsgemäßen Verfahrens wird das im Schritt b) erhaltene Reaktionsgemsich durch Zugabe einer Säure wie Salzsäure oder Schwefelsäure auf pH 4 bis 9, vorzugsweise 5 bis 8, eingestellt und anschließend im Oxidationsschritt gebildete Metalloxide und -hydroxide durch übliche Methoden wie Filtration oder Zentrifugieren abgetrennt.

Im Schritt d) wird schließlich das Gegenionsalz Me_{z}Y_{q}, worin Me für ein Alkalimetallion, Ammoniumion oder ein Alkanolammoniumion steht und z, q und Y die angegebenen Bedeutungen haben, zu dem in Schritt c) erhaltenen Reaktionsgemisch hinzugefügt und der Metallkomplex gemäß Formel (1) gebildet.

Das Gegenionsalz Me_{z}Y_{q} wird vorzugsweise in einer solchen Menge eingesetzt, dass das Molverhältnis von im Schritt a) eingesetzten Metall(II)-Salz zu Me_{z}Y_{q} -Salz bei 4 : 1 bis 1 : 4, besonders bevorzugt bei 2 : 1 bis 1 : 2 und insbesondere bevorzugt bei 1 : 1 bis 1 : 2 liegt. Geeignete Gegenionsalze sind zum Beispiel Perchlorate, Tetraphenylborate und Hexafluorophosphate, wobei Hexafluorophosphate bevorzugt sind.

Das Salz Me_{z}Y_{q} zur Einführung des ladungsausgleichenden Gegenions Y (vergleiche Formel (1)) - wird entweder in fester oder in Wasser gelöster Form in die im Schritt c) erhaltene Reaktionsmischung eingebracht. In einer bevorzugten Ausführungsform der Erfindung wird eine gesättigte Lösung des Salzes Me_{z}Y_{q}, im Allgemeinen bei einer Temperatur von 5 bis 100 °C, vorzugsweise 40 bis 80 °C, und Atmosphärendruck zum Reaktionsgemisch, gehalten bei 10 bis 40 °C, hinzugegeben. Der gewünschte Metallkomplex fällt nach dem Abkühlen als kristalliner Feststoff aus und kann z. B. durch Filtration oder über eine Zentrifuge abgetrennt werden.

Mit dem erfindungsgemäßen Verfahren werden die zweikernigen Mangankomplex-Verbindungen der allgemeinen Formel (1) mit vorzugsweise vierwertigem Metall in schonender Weise hergestellt. Besonders bevorzugte Komplexe, die auf diese Art synthetisiert werden können, sind:

[Mn^{(IV)}₂ (µ-O)₃ (1,4,7-Me₃ -TACN)₂] 2 PF₆ *H₂O

[Mn^{(IV)}Fe^{(III)} (µ-O)₃ (1,4,7-Me₃ -TACN)₂] 2 PF₆ *H₂O

[Mn^{(IV)}₂ (µ-O)₃ (1,4,7-Me₃ -TACN)₂] 2 BF₄ *H₂O

[Mn^{(IV)}₂ (µ-O) (µ-OAc)₂ (1,4,7-Me₃ -TACN)₂] 2 PF₆ *H₂O

Insbesondere bevorzugt kann mit dem erfindungsgemäßen Verfahren Tri-µ-oxo-bis[(1,4,7-trimethyl-1,4,7-triazacyclononan)-mangan(IV)]-bis-hexafluorophosphat Monohydrat hergestellt werden.

Aufgrund der relativ geringen Wassermenge als einzigem Lösungsmittel und der spezifischen Reihenfolge der Umsetzungsschritte wird gleichzeitig eine hohe Raum-Zeit-Ausbeute (etwa 0,2 kg/l) und ein hochreines Produkt erzielt. Die Ausbeuten liegen im Allgemeinen bei über 80 % und die Reinheit bei mindestens 98,5 %. Der Anteil an Metalloxiden und -hydroxiden, wie z. B. MnO₂, liegt unter 0,3 Gew.-%. Der Metallkomplex ist frei von Ligandsalz (zum Beispiel Salz aus dem monoprotonierten Cycloamin und PF₆-Anion), dessen Bildung bei den Verfahren des Standes der Technik häufig vorkommt (siehe nachstehendes Vergleichsbeispiel).

Es wird eine hohe Wirtschaftlichkeit erreicht, weil die Umsetzungen mit wenig Lösungsmittel, das heißt in konzentrierter Form durchgeführt werden kann und keine Destillationskosten anfallen. Dies hat den weiteren Vorteil, dass keine thermische Belastung des Komplexes erfolgt.

Die nach dem erfindungsgemäßen Verfahren hergestellten Metallkomplexe finden als Oxidationskatalysatoren insbesondere Verwendung als Bleichmittelkomponente in Wasch- und Reinigungsmitteln im Haushalt oder in gewerblichen Wäschereien, daneben in der Textil- und Papierbleiche sowie in industriellen Oxidationsreaktionen.

Im Folgenden wird die Erfindung anhand von Beispielen verdeutlicht, die jedoch keinesfalls als Einschränkung anzusehen sind.

### Vergleichsbeispiel 1 (nach WO-A-93/25562 mit alkoholischem Lösungsmittel und Zugabe von KPF₆ vor dem Oxidationsschritt)

28,9 g Mangandichlorid-4-hydrat (0,146 mol) werden in einem 2-Liter-Kolben in eine Mischung aus 530 g Ethanol und 330 g Wasser eingerührt und mit 25 g 1,4,7-Trimethyl-1,4,7-triazacyclononan (0,146 mol) und 28,8 g (0,156 mol) Kaliumhexafluorophosphat versetzt. Nachdem die Mischung 20 Minuten bei Raumtemperatur gerührt worden ist, wird mit einem Eisbad auf etwa 5 °C abgekühlt und eine Lösung aus 165 g (0,146 mol) 3 Gew.-%iger Wasserstoffperoxid-Lösung und 44 g (0,22 mol) 20 Gew.-%iger Natronlauge über 10 Minuten zugetropft. Danach lässt man noch 1 Stunde im Eisbad bei etwa 5 °C rühren, entfernt das Eisbad und rührt für 1 Stunde nach. Zur Aufarbeitung wird die Reaktionsmischung mit 25,8 g 1 N-Schwefelsäure auf einen pH-Wert von 8 bis 9 gestellt, die unlöslichen Feststoffe (Manganoxide) werden abgenutscht und der Nutschkuchen wird mit etwa 200 g Wasser gespült bis das durchlaufende Wasser farblos bleibt. Das Filtrat wird zur Kristallisation des Produktes bis auf etwa 1/8 seines Volumens eingeengt und die gebildeten Kristalle abgenutscht. Nachdem der tiefrote Kristallbrei nochmals mit 20 g Ethanol gewaschen worden ist, wird er in einem Vakuumtrockenschrank bei 50 °C getrocknet. Man erhält 43,1 g (73 % Ausbeute, Reinheit: 90 bis 96 %) Tri-µ-oxo-bis[(1,4,7-trimethyl-1,4,7-triazacyclononan)-mangan(IV)]-bis-hexafluorophosphat Monohydrat. Im Produkt lässt sich mittels HPLC noch 4 bis 10 Gew.-% Ligandsalz (C₉H₂₁N₃H⁺PF₆⁻) nachweisen. (HPLC mit reversed-phase Säule und Methanol/Wasser als mobile Phase, Detektion mittels UV bei 205 mm).

### Vergleichsbeispiel 2 (Zugabe von KPF₆ bei hohem pH-Wert)

39,6 g Mangandichlorid-4-hydrat (0,2 mol) werden in 180 g Wasser in einem 1 Liter-Kolben vorgelegt und mit 34,3 g 1,4,7-Trimethyl-1,4,7-triazacyclononan (0,2 mol) versetzt. Nachdem 45 Minuten bei Raumtemperatur gerührt worden ist, wird auf 5 °C abgekühlt und mit einer Mischung aus 60,3 g (0,301 mol) 20 Gew.-%iger Natronlauge und 226,7 g (0,2 mol) 3 Gew.-%iger Wasserstoffperoxid-Lösung unter Temperaturkontrolle versetzt, das heißt während der Zugabe dieser alkalischen Wasserstoffperoxid-Lösung wird die Temperatur der Reaktionsmischung zwischen 10 bis 15 °C gehalten. Danach werden 39,4 g (0,214 mol) Kaliumhexafluorophosphat bei einem pH-Wert > 12,5 in fester Form zugegeben und anschließend wird noch für 2 bis 3 Stunden bei Raumtemperatur nachgerührt. Zur Aufarbeitung wird die Reaktionsmischung (pH > 12,5) mit 9,7 g 50 Gew.-%iger Schwefelsäure auf einen pH-Wert von 8 bis 9 gestellt und die Feststoffe der Reaktionsmischung über ein Papierfilter abgenutscht. Zur vollständigen Entfernung von Restmengen von wasserlöslichen, anorganischen Salzen wird der Nutschkuchen zweimal mit je 70 g Eiswasser gewaschen. Nach dem Trocknen im Vakuumtrockenschrank bei 80 °C erhält man 64 g (79 % Ausbeute) Tri-µ-oxo-bis[(1,4,7-trimethyl-1,4,7-triazacyclononan)-mangan(IV)]-bis-hexafluorophosphat Monohydrat als 96 %igen Feststoff (nach HPLC). Im Produkt lässt sich kein Ligandsalz (Messgrenze < 0,1 Gew.-%) nachweisen. Der Gehalt an Mangandioxid im Produkt beträgt 4 Gew.-%.

### Beispiel 1

39,6 g Mangandichlorid-4-hydrat (0,2 mol) werden in 180 g Wasser in einem 1 Liter-Kolben vorgelegt und mit 34,3 g 1,4,7-Trimethyl-1,4,7-triazacyclononan (0,2 mol) versetzt. Nachdem auf 5 °C abgekühlt wurde, wird eine Mischung aus 60,3 g (0,301 mol) 20 Gew.-%iger Natronlauge und 226,7 g (0,2 mol) 3 Gew.-%iger Wasserstoffperoxid-Lösung unter Temperaturkontrolle (10 bis 15 °C) hinzugegeben. Nach beendeter Zugabe wird die Reaktionsmischung (pH > 12,5) mit 12,1 g 50 Gew.-%iger Schwefelsäure auf einen pH-Wert von 6 gestellt. Die abgeschiedenen braun-schwarzen Feststoffe werden abgenutscht und das erhaltene Filtrat bei einem pH-Wert von 6 mit 39,4 g (0,214 mol) gemahlenem Kaliumhexafluorophosphat (< 10 µm) in fester Form versetzt. Der in der Reaktionsmischung angefallene Feststoff wird abgenutscht und zweimal mit je 70 g Eiswasser gewaschen. Nach dem Trocknen im Vakuumtrockenschrank bei 80 °C erhält man 65,4 g (81 % Ausbeute) Tri-µ-oxo-bis[(1,4,7-trimethyl-1,4,7-triazacyclononan)-mangan(IV)]-bis-hexafluorophosphat Monohydrat. Das Produkt ist frei von Ligandsalz (Messgrenze < 0,1 Gew.-%) und Mangandioxid (Messgrenze < 0,1 Gew.-%).

### Beispiel 2

39,6 g Mangandichlorid-4-hydrat (0,2 mol) werden in 110 g Wasser in einem 1 Liter-Kolben vorgelegt und mit 34,3 g 1,4,7-Trimethyl-1,4,7-triazacyclononan (0,2 mol) versetzt. Die Lösung wird abgekühlt und mit einer Mischung aus 60,3 g (0,301 mol) 20 Gew.-%iger Natronlauge und 226,7 g (0,2 mol) 3 Gew.-%iger Wasserstoffperoxid-Lösung bei 10 bis 15 °C versetzt. Nach beendeter Zugabe wird die Reaktionsmischung (pH > 12,5) mit 12,1 g 50 Gew.-%iger Schwefelsäure auf einen pH-Wert von 6 gestellt. Die Feststoffe (Manganoxide/-hydroxide) der Reaktionsmischung werden abgenutscht und das erhaltene Filtrat bei einem pH-Wert von 6 mit einer Lösung aus 34,9 g (0,214 mol) Ammoniumhexafluorophosphat in 30 g Wasser versetzt, anschließend wird für 1 Stunde nachgerührt. Der in der Reaktionsmischung angefallene Feststoff wird abgenutscht und zweimal mit je 70 g Eiswasser gewaschen. Nach dem Trocknen im Vakuumtrockenschrank bei 80 °C erhält man 67 g (83 % Ausbeute) orangerotes Tri-µ-oxo-bis[(1,4,7-trimethyl-1,4,7-triazacyclononan)-mangan(IV)]-bis-hexafluorophosphat Monohydrat als mindestens 99 %igen Feststoff (nach HPLC). Im Produkt lässt sich kein Ligandsalz und Mangandioxid (Messgrenze < 0,1 Gew.-%) nachweisen

### Beispiel 3

39,6 g Mangandichlorid-4-hydrat (0,2 mol) werden in 110 g Wasser in einem 1 Liter-Kolben vorgelegt und mit 34,3 g 1,4,7-Trimethyl-1,4,7-triazacyclononan (0,2 mol) versetzt. Nach Abkühlung auf 5 °C wird eine Mischung aus 60,3 g (0,301 mol) 20 Gew.-%iger Natronlauge und 226,7 g (0,2 mol) 3 Gew.-%iger Wasserstoffperoxid-Lösung unter Temperaturkontrolle hinzugegeben. Nach beendeter Zugabe wird für 5 Minuten nachgerührt und die Reaktionsmischung (pH > 12,5) mit 12,1 g 50 Gew.-%iger Schwefelsäure auf einen pH-Wert von 6 gestellt. Die dunklen Niederschläge (Manganoxide/-hydroxide) werden abgenutscht und das erhaltene Filtrat bei einem pH-Wert von 6 mit einer 80 °C heißen Lösung aus 39,4 g (0,214 mol) Kaliumhexafluorophosphat in 75 g Wasser versetzt. Der in der Reaktionsmischung angefallene Feststoff wird abgenutscht und zweimal mit je 70 g Eiswasser gewaschen. Nach dem Trocknen im Vakuumtrockenschrank bei 80 °C erhält man 67 g (83 % Ausbeute) Tri-µ-oxo-bis[(1,4,7-trimethyl-1,4,7-triazacyclononan)-mangan(IV)]-bis-hexafluorophosphat Monohydrat als mindestens 99 %igen Feststoff (nach HPLC). Im Produkt lässt sich kein Ligandsalz und Mangandioxid (Meßgrenze < 0,1 Gew.-%) nachweisen.

### Beispiel 4

Synthese von Mn/Fe-Komplex [Mn^{(IV)}Fe^{(III)} (µ-O)₃ (1,4,7-Me₃ -TACN)₂] 2 PF₆ *H₂O 19,8 g Mangandichlorid-4-hydrat (0,1 mol) und 19,9 g Eisen(II)chlorid (0,1 mol) werden in 110 g Wasser in einem 1 Liter-Kolben vorgelegt und mit 34,2 g 1,4,7-Trimethyl-1,4,7-triazacyclononan (0,2 mol) versetzt. Nach Abkühlung auf 5 °C wird eine Mischung aus 60,3 g (0,301 mol) 20 Gew.-%iger Natronlauge und 226,7 g (0,2 mol) 3 Gew.-%iger Wasserstoffperoxid-Lösung unter Temperaturkontrolle hinzugegeben. Nach beendeter Zugabe wird für 5 Minuten nachgerührt und die Reaktionsmischung (pH > 12,5) mit 12,1 g 50 Gew.-%iger Schwefelsäure auf einen pH-Wert von 8,0 gestellt. Die dunklen Niederschläge (Manganoxide/-hydroxide) werden abgenutscht und das erhaltene Filtrat bei einem pH-Wert von 8 mit einer 70 °C heißen Lösung aus 39,4 g (0,214 mol) Kaliumhexafluorophosphat in 75 g Wasser versetzt. Der in der Reaktionsmischung angefallene Feststoff wird abgenutscht und zweimal mit je 70 g Eiswasser gewaschen. Nach dem Trocknen im Vakuumtrockenschrank bei 80 °C erhält man 48,3 g Mn/Fe-Komplex [Mn^{(IV)}Fe^{(III)} (µ-O)₃ (1,4,7-Me₃ -TACN)₂] 2 PF₆ *H₂O als rotbraunen Feststoff. Aus der Mutterlauge scheiden sich weitere 11,2 g des Komplexes ab. Gesamtausbeute: 59,5 g. Im Produkt lässt sich kein Ligandsalz und Mangandioxid (Messgrenze < 0,1 Gew.-%) nachweisen.

### Beispiel 5 (nicht erfindungsgemäß)

### Synthese von [Mn^{(IV)}Mn^{(III)} (µ-O)₃ (4,7-Me₄ -DTNE)] 2 PF₆ *H₂O

8,5 g 1,2-bis-(4,7-dimethyl-1,4,7-triazacyclon-1-yl)-ethan (Me₄-DTNE) (25 mmol) werden nach Beispiel 3 mit 4,95 g (25 mmol) Mangandichlorid-4-hydrat umgesetzt und bei pH 12 zur Mn^{(III)}/Mn^{(IV)}-Verbindung aufoxidiert. Nach Absenkung des pH-Wertes auf 7,5 und Abtrennung der Manganoxide wird bei einem pH-Wert von 7,5 eine heiße Lösung von 4,6 g KPF₆ in Wasser hinzugefügt. Nach Aufarbeitung werden 12,7 g grünliche Kristalle des [Mn^{(IV)}Mn^{(III)} (µ-O)₃ (4,7-Me₄ -DTNE)] 2 PF₆ *H₂O isoliert. Im Produkt lässt sich kein Ligandsalz und Mangandioxid (Messgrenze < 0,1 Gew.-%) nachweisen.

## Patentansprüche

1. Verfahren zur Herstellung von Mangankomplex-Verbindungen der allgemeinen Formel (1) 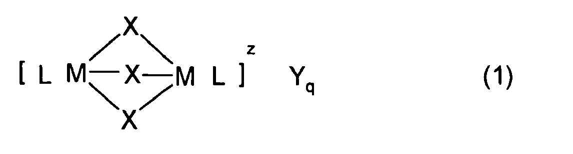 worin
M ausgewählt ist aus Mangan und Eisen in der III- oder IV-Oxidationsstufe, wobei aber mindestens ein M ein Mangan in der III- oder IV-Oxidationsstufe ist,
X unabhängig voneinander eine koordinierende oder verbrückende Spezies ist, ausgewählt aus H₂O, O₂²⁻, O₂⁻, O²⁻, OH⁻, HO₂⁻, SH⁻, S²⁻, SO, Cl⁻, N³⁻, SCN⁻, N₃⁻, RCOO⁻, NH₂ und NR₃, wobei R ein Radikal ausgewählt aus H, Alkyl und Aryl ist,
L 1,4,7-Trimethyl-1,4,7-triazacyclononan ist,
z eine ganze Zahl von -4 bis +4 ist,
Y ein mono- oder multivalentes Gegenion aus der Gruppe Hexafluorophosphat, Perchlorat oder Tetraphenylborat ist, das zur Ladungsneutralität des Komplexes führt, und
q eine ganze Zahl von 1 bis 4 ist,
**gekennzeichnet durch** die folgenden Verfahrensschritte:
a) Umsetzung von einem oder mehreren zweiwertigen Metallsalzen, wobei das eine oder die mehreren zweiwertigen Metallsalze ausgewählt sind aus zweiwertigen Mangan- und Eisensalzen und mindestens ein zweiwertiges Metallsalz ein zweiwertiges Mangansalz ist, mit dem Ligand L in Wasser als Lösungsmittel zur Bildung einer Koordinationsverbindung aus dem einen oder den mehreren zweiwertigen Metallsalzen und dem Ligand L,
b) Oxidation der Koordinationsverbindung aus Schritt a) mit einem Oxidationsmittel, wobei gleichzeitig ein pH-Wert von 11 bis 14 eingehalten wird, zur Überführung des Metalls M von der zweiwertigen in die drei- und/oder vierwertige Stufe,
c) Absenkung des pH-Wertes des Reaktionsgemsiches auf einen pH-Wert von 4 bis 9, vorzugsweise von 5 bis 8, und Abtrennung etwaig gebildeter Metalloxide oder -hydroxide des Metalls M und
d) Zugabe eines Salzes der Formel Me_{z}Y_{q} ,worin Me für ein Alkalimetallion, ein Ammoniumion oder ein Alkanolammoniumion steht und Y, z und q die angegebenen Bedeutungen haben, bei einem pH-Wert von 4 bis 9 und vorzugsweise von 5 bis 8, und wobei das Gegenionsalz Me_{z}Y_{q} erst nach dem Oxidationsschritt und der Abtrennung der gebildeten Metalloxide und -hydroxide in die Reaktionsmischung eingebracht und umgesetzt wird.

2. Verfahren nach Anspruch 1, **dadurch gekennzeichnet, dass** die kristallin ausgefallene Mangankomplex-Verbindung der allgemeinen Formel (1) in einem Schritt e) isoliert wird, vorzugsweise durch Filtration oder Zentrifugieren.

3. Verfahren nach Anspruch 1 oder 2, **dadurch gekennzeichnet, dass** M in der allgemeinen Formel (1) Mangan in der III- oder IV-Oxidationsstufe ist und das eine oder die mehreren zweiwertigen Metallsalze aus Schritt a) zweiwertige Mangansalze sind.

4. Verfahren nach einem oder mehreren der Ansprüche 1 bis 3, **dadurch gekennzeichnet, dass** das eine oder die mehreren zweiwertigen Metallsalze und die Ligandverbindung bei der Umsetzung in Schritt a) zusammen in einer Menge von mindestes 15 Gew.-Teilen, pro 100 Gew.-Teile Wasser, vorliegen.

5. Verfahren nach Anspruch 4, **dadurch gekennzeichnet, dass** das eine oder die mehreren zweiwertigen Metallsalze und die Ligandverbindung bei der Umsetzung in Schritt a) zusammen in einer Menge von 15 bis 55 Gew.-Teilen, pro 100 Gew.-Teile Wasser, vorliegen.

6. Verfahren nach Anspruch 5, **dadurch gekennzeichnet, dass** das eine oder die mehreren zweiwertigen Metallsalze und die Ligandverbindung bei der Umsetzung in Schritt a) zusammen in einer Menge von 20 bis 50 Gew.-Teilen, pro 100 Gew.-Teile Wasser, vorliegen.

7. Verfahren nach einem oder mehreren der Ansprüche 1 bis 6, **dadurch gekennzeichnet, dass** das Oxidationsmittel ausgewählt ist aus der Gruppe Luft, reiner Sauerstoff, Wasserstoffperoxid, Alkalimetallperoxid und Alkalimetallpermanganat, gegebenenfalls in Kombination mit einem Alkalimetallhydroxid.

8. Verfahren nach einem oder mehreren der Ansprüche 1 bis 7, **dadurch gekennzeichnet, dass** das Gegenion Y Hexafluorophosphat ist.

9. Verfahren nach einem oder mehreren der Ansprüche 1 bis 8, **dadurch gekennzeichnet, dass** Tri-µ-oxo-bis[(1,4,7-trimethyl-1,4-7-triazacyclononan)-mangan(IV)]-bis-hexafluorophosphat Monohydrat hergestellt wird.

## Claims

1. A method for producing manganese complex compounds of the formula (1) 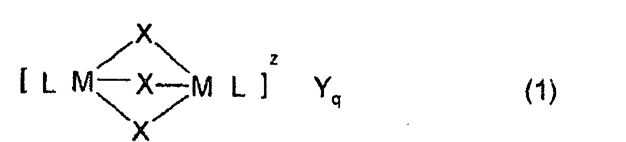 in which
M is selected from manganese and iron in oxidation state III or IV, but where at least one M is a manganese in oxidation state III or IV,
X independently of the others is a coordinating or bridging species, selected from H₂O, O₂²⁻, O₂⁻, O²⁻, OH-, HO₂⁻, SH^{-,} S²⁻, SO, Cl⁻, N³⁻, SCN⁻, N₃⁻, RCOO⁻, NH₂⁻ and NR₃, where R is a radical selected from H, alkyl and aryl,
L is 1,4,7-trimethyl-1,4,7-triazacyclononane,
z is an integer from -4 to +4,
Y is a mono- or multivalent counterion from the group hexafluorophosphate, perchlorate or tetraphenylborate, which leads to the charge neutrality of the complex, and
q is an integer from 1 to 4,
which comprises the following steps:
a) reacting one or more divalent metal salts, where the one or more divalent metal salts are selected from divalent manganese and iron salts and at least one divalent metal salt is a divalent manganese salt, with the ligand L in water as solvent for forming a coordination compound of the one or more divalent metal salts and the ligand L,
b) oxidation of the coordination compound from step a) with an oxidizing agent, where at the same time a pH from 11 to 14 is maintained, for converting the metal M from the divalent state to the tri- and/or tetravalent state,
c) reducing the pH of the reaction mixture to a pH from 4 to 9, preferably from 5 to 8, and separating off any metal oxides or hydroxides of the metal M formed and
d) addition of a salt of the formula Me_{z}Y_{q}, in which Me is an alkali metal ion, an ammonium ion or an alkanolammonium ion, and Y, z and q have the stated meanings, at a pH from 4 to 9 and preferably from 5 to 8, and where the counterion salt Me_{z}Y_{q} is only introduced into the reaction mixture and reacted after the oxidation step and the removal of the metal oxides and metal hydroxides formed.

2. The method as claimed in claim 1, wherein the crystalline precipitated manganese complex compound of the formula (1) is isolated in a step e), preferably by filtration or centrifugation.

3. The method as claimed in claim 1 or 2, wherein M in the formula (1) is manganese in oxidation state III or IV and the one or more divalent metal salts from step a) are divalent manganese salts.

4. The method as claimed in one or more of claims 1 to 3, wherein the one or more divalent metal salts and the ligand compound during the reaction in step a) are present together in an amount of at least 15 parts by weight per 100 parts by weight of water.

5. The method as claimed in claim 4, wherein the one or more divalent metal salts and the ligand compound during the reaction in step a) are present together in an amount of 15 to 55 parts by weight per 100 parts by weight of water.

6. The method as claimed in claim 5, wherein the one or more divalent metal salts and the ligand compound during the reaction in step a) are present together in an amount of 20 to 50 parts by weight per 100 parts by weight of water.

7. The method as claimed in one or more of claims 1 to 6, wherein the oxidizing agent is selected from the group air, pure oxygen, hydrogen peroxide, alkali metal peroxide and alkali metal permanganate, optionally in combination with an alkali metal hydroxide.

8. The method as claimed in one or more of claims 1 to 7, wherein the counterion Y is hexafluorophosphate.

9. The method as claimed in one or more of claims 1 to 8, wherein tri-µ-oxobis[(1,4,7-trimethyl-1,4,7-triazacyclononane)manganese(IV)]bishexafluorophosphate monohydrate is produced.

## Revendications

1. Procédé de fabrication de composés de complexe de manganèse de la formule générale (1) 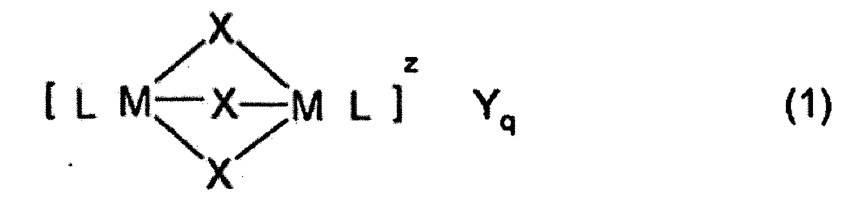 dans laquelle
M est sélectionné parmi le manganèse et le fer dans l'état d'oxydation III ou IV, dans laquelle au moins un M est toutefois un manganèse dans l'état d'oxydation III ou IV,
X est indépendamment les uns des autres une espèce de coordination ou de pontage sélectionnée parmi H₂O, O₂²⁻, O₂⁻, O²⁻, OH⁻, HO₂⁻, SH⁻, S²⁻, SO, Cl⁻, N³⁻, SCN-, N₃⁻, RCOO⁻, NH₂⁻ et NR₃, dans laquelle R est un radical sélectionné parmi H, alkyle et aryle,
L est le 1,4,7-triméthyl-1,4,7-triazacyclononane,
z est un nombre entier de -4 à +4,
Y est un ion conjugué mono- ou multivalent parmi le groupe hexafluorophosphate, perchlorate ou tétraphénylborate qui conduit à la neutralité de charge du complexe, et
q est un nombre entier de 1 à 4,
**caractérisé par** les étapes de procédé suivantes :
a) conversion d'un ou plusieurs sels métalliques bivalents, dans lequel le ou les sels métalliques bivalents sont sélectionnés parmi des sels de manganèse et de fer bivalents et au moins un sel métallique bivalent est un sel de manganèse bivalent, avec le ligand L dans de l'eau en tant que solvant pour la formation d'un composé de coordination constitué du ou des sels métalliques bivalents et du ligand L,
b) oxydation du composé de coordination de l'étape a) avec un oxydant, dans lequel une valeur de pH de 11 à 14 est maintenue simultanément, pour la transformation du métal M de l'état bivalent en l'état tri- et/ou tétravalent,
c) diminution de la valeur de pH du mélange réactionnel à une valeur de pH de 4 à 9, de préférence de 5 à 8, et séparation des oxydes ou hydroxydes métalliques éventuellement formés du métal M et
d) addition d'un sel de la formule Me_{z}Y_{q}, dans laquelle Me représente un ion de métal alcalin, un ion ammonium ou un ion alcanolammonium et Y, z et q ont les significations indiquées, à une valeur de pH de 4 à 9 et de préférence de 5 à 8, et dans laquelle le sel d'ion conjugué Me_{z}Y_{q} n'est introduit dans le mélange réactionnel et converti qu'après l'étape d'oxydation et la séparation des oxydes et hydroxydes métalliques formés.

2. Procédé selon la revendication 1, **caractérisé en ce que** le composé de complexe de manganèse précipité de manière cristalline de la formule générale (1) est isolé dans une étape e), de préférence par filtration ou centrifugation.

3. Procédé selon la revendication 1 ou 2, **caractérisé en ce que** M dans la formule générale (1) est du manganèse dans l'état d'oxydation III ou IV et le ou les sels métalliques bivalents de l'étape a) sont des sels de manganèse bivalents.

4. Procédé selon une ou plusieurs des revendications 1 à 3, **caractérisé en ce que** le ou les sels métalliques bivalents et le composé de ligand sont présents lors de la conversion à l'étape a) ensemble en une quantité d'au moins 15 parties en poids par 100 parties en poids d'eau.

5. Procédé selon la revendication 4, **caractérisé en ce que** le ou les sels métalliques bivalents et le composé de ligand sont présents lors de la conversion à l'étape a) ensemble en une quantité de 15 à 55 parties en poids par 100 parties en poids d'eau.

6. Procédé selon la revendication 5, **caractérisé en ce que** le ou les sels métalliques bivalents et le composé de ligand sont présents lors de la conversion à l'étape a) ensemble en une quantité de 20 à 50 parties en poids par 100 parties en poids d'eau.

7. Procédé selon une ou plusieurs des revendications 1 à 6, **caractérisé en ce que** l'oxydant est sélectionné parmi le groupe air, oxygène pur, peroxyde d'hydrogène, peroxyde de métal alcalin et permanganate de métal alcalin, éventuellement en combinaison avec un hydroxyde de métal alcalin.

8. Procédé selon une ou plusieurs des revendications 1 à 7, **caractérisé en ce que** l'ion conjugué Y est un hexafluorophosphate.

9. Procédé selon une ou plusieurs des revendications 1 à 8, **caractérisé en ce que** du monohydrate de tri-µ-oxo-bis[(1,4,7-triméthyl-1,4,7-triazacyclononane)-manganèse(IV)]-bis-hexafluorophosphate est fabriqué.
